# EUROPÄISCHE PATENTSCHRIFT

(11) **EP 0 854 163 B1**
(45) Veröffentlichungstag und Bekanntmachung des Hinweises auf die Patenterteilung: **14.04.2004**
(21) Anmeldenummer: 98100336.1
(22) Anmeldetag: 10.01.1998
(51) Int. Cl.: C08J 5/06, D06M 13/08, D06M 13/144, D06M 13/148, D06M 13/165, D06M 13/236, D06M 13/368, D01F 11/14, D01F 6/62, D06M 15/53

(54) **Verstreckte Polyestergarne zur Verstärkung von elastischen Gebilden**
Stretched polyester yarns for the reinforcement of elastic structures
Fils de polyester orientés pour le renforcement de structures élastiques

(30) Priorität: 17.01.1997 DE 19701550
(43) Veröffentlichungstag der Anmeldung: 22.07.1998
(73) Patentinhaber: ARTEVA TECHNOLOGIES S.à.r.l., 8001 Zürich (CH)
(72) Erfinder: Berndt, Kurt-Günter, Dr., 86343 Königsbrunn (DE)
(74) Vertreter: Zounek, Nikolai, Dipl.-Ing.

(56) Entgegenhaltungen:
- EP-A- 0 395 432
- EP-A- 0 637 602
- D.A. SCHIFFLER, : "Yarns for tyres and industrial uses" POLYESTER 50 YEARS OF ACHIEVEMENT,1993, Seite 102-104 XP002107249 Manchester, GB;

## Beschreibung

Die Erfindung betrifft verstreckte Polyestergarne mit erhöhter Festigkeit und verbesserten Haftungseigenschaften zur Verstärkung von elastischen Gebilden wie Förderbändern Reifen und dergleichen.

Zur Verstärkung von elastischen Gebilden wie Förderbändern Reifen, und dergleichen werden bereits seit langem Game aus den verschiedensten Materialien eingesetzt. Wurden zunächst Verstärkungen aus Reyon und Polyamid verwendet, so gewannen im Laufe der Zeit auch Polyesterfasem ständig an Bedeutung. Um die Eignung von Polyesterfasern als Verstärkungsmaterial zu verbessern, hat man sowohl die Fasern selbst als auch die Haftvermittler weiter entwickelt. So hat man die Hydrolysebeständigkeit von Polyethylenterephthalat durch Erhöhung des Molekulargewichts und Reduzierung der Carboxylendgruppenzahl verbessert. Durch Weiterentwicklung der Spinn-und Strecktechnik ließ sich die Festigkeit der Game erhöhen.

Zur Verbesserung der Haftung zwischen Garnmaterial und elastischem Material wie Gummi, Kautschuk usw. wurden eine ganze Reihe von sogenannten Dip-Systemen entwickelt. Viele bekannte Haftungsmittel sind auf Epoxyverbindungen aufgebaut, wie z.B. in der US-PS 3 793 425 und in der US-PS 4 044 189 beschrieben wird. Es sind auch bereits Ether oder Ester auf der Basis von Epichlorhydrin und mehrwertigen Alkoholen oder Polycarbonsäuren bekannt, wie z.B. in der US-PS 4 438 178 gelehrt wird.

Auch bei diesen Verbindungen handelt es sich um Substanzen, die Epoxid-Gruppen aufweisen.

In neuerer Zeit wurden auch Haftvermittler entwickelt, die keine Epoxid-Gruppen besitzen. So werden in der EP-A1-0 637 602 organische Verbindungen offenbart, welche 2-Halogenmethyloxyethyleneinheiten, sekundäre Hydroxylgruppen und von organischen Säuren abgeleitete Estergruppen aufweisen. Diese Verbindungen sind im wesentlichen frei von Halohydrin und Epoxid-Gruppen und werden z. B. zur Verbesserung der Haftung von Fasern aus Polyamiden, Polyestern, Kohlenstoff usw. eingesetzt.

In der EP-A2-0 395 432 schließlich werden Polyether beschrieben, die wenigstens eine 2-Halogenmethyloxyethyleneinheit und eine 2,3-Dihydroxypropylendgruppe aufweisen, die ebenfalls im wesentlichen frei von Epoxid-Gruppen und Halohydringruppen sind. Die vorstehend erwähnten epoxid- und halohydringruppenfreien Verbindungen werden als wäßrige Emulsionen oder wäßrige Losungen mit einem beträchtlichen Wassergehalt auf die zu behandelnden Fasern appliziert.

In der offengelegten japanischen Patentanmeldung (Kokai) 7-70819 wird ein Verfahren zum Verstrecken von schnellgesponnenen noch nicht verstreckten Polyestergarnen beschrieben, bei dem die Garne nach dem Abziehen und vor dem Verstrecken mit einer öligen Präparation behandelt werden, die einen Wassergehalt von maximal 10% aufweist. Anschließend werden die Garne einer mehrstufigen Verstreckung bei unterschiedlichen Temperaturen unterzogen. Die so hergestellten Garne können z.B. in Form eines Cordes zur Verstärkung von Gummiartikeln dienen.

Die Verbesserung der Gummihaftung wird in dieser japanischen Patentanmeldung nicht gelehrt, die erzielten Festigkeiten liegen unter denen, welche gemäß der Erfindung erreicht werden. Außerdem enthält diese Schrift keinerlei Anregungen für den Fachmann, Verbindungen als Haftverbesserer einzusetzen, wie es gemäß der Erfindung der Fall ist.

Obwohl bereits zahlreiche Verfahren bekannt sind, um Polyestergarne mit guten mechanischen Eigenschaften herzustellen und diese dann mit Haftmitteln zu versehen, um die Haftung zwischen Fasern und elastischem Material zu verbessern, besteht noch ein Bedürfnis nach Polyestergarnen, die verbesserte mechanische Eigenschaften und eine gute Haftung zum elastischen Material aufweisen. Aufgabe der Erfindung ist es deshalb, ein Polyestergarn zur Verfügung zu stellen, das eine erhöhte Festigkeit und verbesserte Haftungseigenschaften bei der Verstärkung von elastischen Gebilden wie Förderbändern, Reifen, und dergleichen aufweist, das sich einfach und wirtschaftlich herstellen läßt und dessen Herstellungsverfahren toxikologisch unbedenklich ist.

Diese Aufgabe wird gelöst durch verstreckte Polyestergarne mit erhöhter Festigkeit und verbesserten Haftungseigenschaften zur Verstärkung von elastischen Gebilden wie Förderbändern und Reifen, die dadurch gekennzeichnet sind, daß die Garne eine Feinheitsfestigkeit von >80 cN/tex haben und vor dem Streckprozeß mit einer wasserarmen Präparation ausgerüstet sind, die einen Wassergehalt von unter 10 Gew.-%, bezogen auf das Gesamtgewicht der Präparation, aufweist und daß die Präparation als haftvermittelnde Substanz einen halogenierten Polyether, der mindestens eine 2-Halogenmethyloxyethyleneinheit und mindestens eine 2,3-Dihydroxypropylendgruppe aufweist und der im wesentlichen frei von Epoxidgruppen und Halohydringruppen ist, sowie gegebenenfalls übliche Zusätze wie Gleitmittel, grenzflächenaktive Substanzen und/oder Antistatika enthält.

Weitere vorteilhafte Ausführungsformen sind in den Patentansprüchen 2 bis 5 beschrieben.

Gegenstand der Erfindung ist ferner ein Verfahren zur Herstellung derartiger Polyestergame gemäß Patentanspruch 6, die Verwendung dieser Garne zur Verstärkung von elastischen Gebilden gemäß Patentanspruch 7 sowie ein Präparationsmittel zum Auftragen auf Polyestergarne vor dem Strecken, z.B. beim Spinnstreckprozeß gemäß Patentanspruch 8.

Die haftvermittelnden Substanzen, mit den die spinngestreckten Polyestergarne präpariert werden, sind an sich bekannt und sind z.B. in der

EP-A2-0 395 432 beschrieben. Auf die Offenbarung in dieser europäischen Patentanmeldung wird sich hier ausdrücklich bezogen.

Die auf die Polyestergarne aufgebrachten haftvermittelten Substanzen können durch folgende chemische Formel wiedergegeben werden: 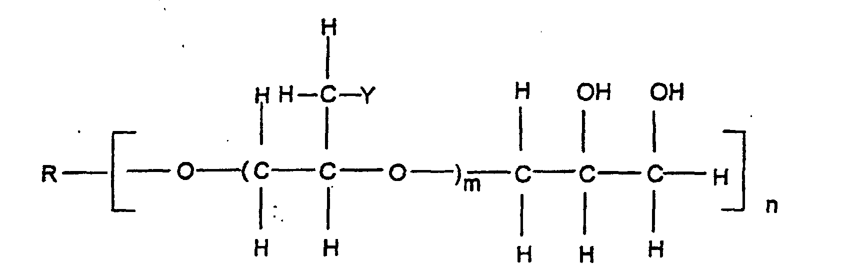 wobei R ein Rest einer veretherten organischen Polyhydroxyverbindung bedeutet. n gleich 2 bis 8 ist und die Zahl der Etherketten angibt, die von R ausgehen, m gleich 1 bis 7, y Chlor, Brom oder Jod oder eine Mischung derselben bedeutet.

Es ist nicht erforderlich, daß alle Hydroxygruppen der veretherten organischen Polyhydroxyverbindung, verethert sind. So ist es durchaus möglich, dass nur zwei Hydroxygruppen verethert sind und noch eine freie Hydroxygruppe vorhanden ist, wenn Glycerin die Polyhydroxyverbindung ist, ist Sorbit beispielsweise die Polyhydroxyverbindung, so können ohne weiteres ein bis vier Hydroxygruppen unverethert bleiben.

Bevorzugt leitet sich die aufgebrachte haftvermittelnde Substanz von Glycerin als Polyhydroxyverbindung ab.

Vom Glycerin, eine bevorzugt verwendete Polyhydroxyverbindung, abgeleitete erfindungsgemäß eingesetzte Haftvermittler können vorteilhaft Substanzen der Formel II 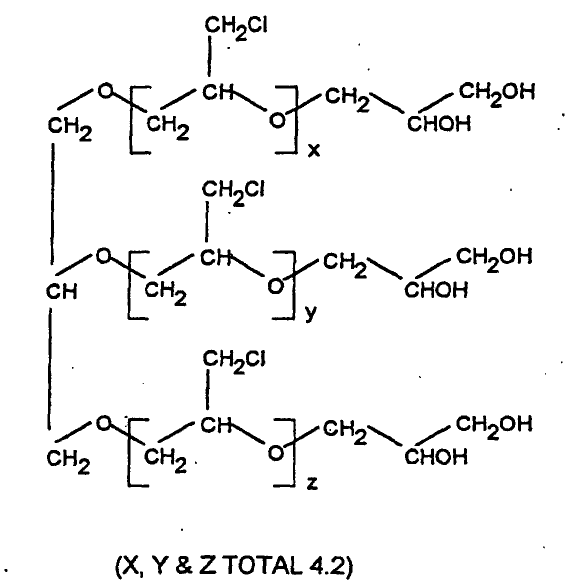 sein.

Die aufgebrachte Präparation kann neben der haftvermittelnden Substanz übliche Zusätze wie Gleitmittel, grenzflächenaktive Substanzen und/oder Antistatika, Viskositätsregler, Aktivatoren enthalten. Sie enthält ferner eine geringe Menge Wasser.

Die Präparation besteht bevorzugt aus
A) einem Grundkörper herkömmlicher Art mit
   A1) Gleitmitteln
   A2) grenzflächenaktiven Substanzen und
   A3) Antistatika.
   wobei diese Bestandteile insbesondere sind:
   A1) Esteröl
   A2) ethoxylierte Fettsäuren und
   A3) organische Phosphorsäureester

Ein weiterer Bestandteil ist
B) ein Viskositätsregler (Verdünnungsmittel), der insbesondere ein Dialkyl-Polyglycol-Ether ist.

Erfindungsrelevant ist
C) eine haftvermittelnde Substanz gemäß Hauptanspruch bzw. der diesbezüglichen Unteransprüche. Dies ist bevorzugt ein hydrolysierter Glycerin-Polyglycidyl-Ether.

Dazu kommt
D) ein Aktivator für die Gummihaftung, insbesondere ein Kaliumsalz einer anorganischen oder organischen Säure, bevorzugt Kaliumacetat.

Als Lösungsmitttel für D ist eine Mindestmenge an
E) Wasser unumgänglich.

Die Anteile der Komponenten an der Präparation betragen im allgemeinen:

| | | |
|---|---|---|
| A) | 85 bis 20 Gew.-% | bevorzugt 58 Gew.-% |
| B) | *5* bis 40 Gew.-% | bevorzugt 28 Gew.-% |
| C) | 4 bis 25 Gew.-% | bevorzugt 10 Gew.-% |
| D) | 0,5 bis 2,5 Gew.-% | bevorzugt 1,0 bis 3,0 Gew.-% |
| E) | 1,0 bis 5,0 Gew.-% | bevorzugt 1,5 bis 3,0 Gew.-% |

Die verwendete Substanz C) läßt sich charakterisieren durch die Strukturformel

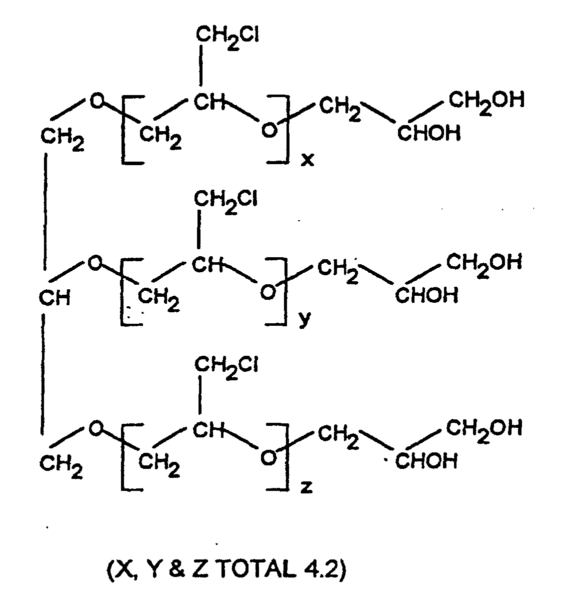

Die mit der erfindungsgemäßen Präparation hergestellten hochfesten Filamente zeichnen sich aus durch folgende Charakteristik:

Feinheitsbezogene Festigkeit > 80,0 cN/dtex, bevorzugt > 82,0 cN/dtex bei einer Höchstzugkraftdehnung von 10 bis 12%. bevorzugt 11%, und einem Heißluftschrumpf bei 200°C von maximal 14%.

### Beispiel

Es wird eine Präparation hergestellt aus:
A) 58 Gew.-% des Handelsproduktes AFILAN TEF der Clariant Gmbtt
B) 28 Gew.-% des Handelsproduktes SYNTHACID 383 der Dr. Th. Böhme KG
C) 10 Gew.-% des Handelsproduktes LUBRIL 17040 von Rhone-Poulenc
D) 1,3 Gew.-% Kaliumacetat und
E) 2,7 Gew.-% Wasser

### Herstellung

Es wird eine Lösung aus 1,3 kg Kaliumacetat und 2,7 kg vollentsalztem Wasser hergestellt. Im Rührkessel werden 28,0 kg Synthacid 383 vorgelegt und 4,0 kg der hergestellten Kaliumacetat-Lösung eingerührt. Anschließend gibt man die abgewogene Menge von 10,0 kg Lubril 17040 zur Synthacid-Mischung und rührt ca. 60 min bis das Produkt vollständig homogenisiert ist.
Danach erfolgt die Zumischung von 58,0 kg Afilan TEF. Die Gesamtmischung wird 30 min nachgerührt.

Unter Einsatz dieser Präparation wurde auf einer Spinnstreckmaschine mit einer zweistufigen Verstreckung unter den folgenden Bedingungen aus Polyethylenterephthalat ein hochfestes Filamentgam hergestellt.

| Maschineneinstellung | | | |
|---|---|---|---|
| Nominaltiter | | dtex | 1100 |
| Filamentzahl | | | 200 |
| Spinnabzug | | m/min | 2500 |
| Geschwindigkeit | Einlaufduo | m/min | 408 |
| | Duo 1 | m/min | 412 |
| | Duo 2 | m/min | 1448 |
| | Duo 3 | m/min | 2541 |
| | Duo 4 | m/min | 2541 |
| Reckverhältnis | | | 1:6,23 |
| Temperaturen | Duo 1 | °C | 115 |
| | Duo 2 | °C | 125 |
| | Duo 3 | °C | 233 |
| | Duo 4 | °C | 120 |
| Präparationsauflage in Gew.-%, bezogen auf das Garngewicht | | % | 0,52 |

### Erzielt wurden folgende Garnparamter:

| | | |
|---|---|---|
| Höchstzugkraft nach DIN EN ISO 2062 | N | 94,7 |
| Feinheitsfestigkeit nach DIN EN ISO 2062 | cN/tex | 84,1 |
| Höchstzugkraftdehnung | % | 11,0 |
| Bezugsdehnung (bei 54 cN/tex) | % | 5,52 |
| Heißluftschrumpf (bei 200°C) | % | 14,0 |
| Latexhaftung | N/cm | 244 |

### Herstellung des Zwirns:

Es wird ein Zwirn der Konstruktion (1100 dtex × 3S130 × 3Z130) nach dem Ringspinnverfahren in 2 Arbeitsschritten hergestellt.
a) Herstellen eines Vorzwims mit 130 Drehungen/m in S-Richtung
b) Herstellung des Auszwirns aus 3 Vorzwimen mit 130 Drehungen/m in Z-Richtung

### Latexieren:

Es wird eine gummifreundliche Ausrüstung des Zwirns mittels eines Resorcin-Formaldehyd-Latex-Dips (RFL) durchgeführt. Der Dip wird bereitet aus:
40 g Bunatex VP 2210 (40 %ig) der Hüls AG
45 g Penacolite B1-A (50 %ig) von Inspec (USA)
12 ml konzentrierter Ammoniak (ca. 25 %ig)
18 ml Formaldehyd (ca. 30 %ig)
510 ml dest. Wasser

In einem Arbeitsschritt erfolgt das Tauchen in das RFL-Bad, die Trocknung des gedippten Zwirns und die Kondensation des RFL-Harzes (230°C, 120 s) bei gleichzeitiger Verstreckung des Zwirns (Zwirnspannung 7500 cN).

### Herstellung des Prüflings:

Der latexierte Zwirn wird in eine Standardgummimischung aus 100 % Naturkautschuk und üblichen Gummizusätzen (Clariant Gmbtt) einvulkanisiert. In einer Vulkanisierform werden 3 mm starke Gummistreifen der Abmessung 10 mm x 300 mm eingelegt, der Zwirn in Parallellage 30 mal aufgelegt in einer Weise etwa 20 mm gummifreie Zwimenden bleiben, und mit Gummistreifen von 6 mm Stärke abgedeckt.

### Vulkanisieren:

Die Vulkanisation erfolgt in einer hydraulischen Vulkanisierpresse der Fa. Wickert & Söhne bei 143°C nach Vorheizen bei 3 kN/cm² während 45 min. Anschließend läßt man die Probe auskühlen und bereitet sie für die Prüfung vor.

### Ermittlung der Haftfestigkeit:

Die Haftfestigkeitsprüfung wird auf einer Zwick-Universalprüfmaschine unter folgenden Bedingungen durchgeführt:

| | |
|---|---|
| Einspannlänge | 140 mm |
| Reißgeschwindigkeit | 300 mm/min |
| Anzahl der Prüfungen | 30 |

Es kommt eine speziell gefertigte obere Klemme zum Einsatz, die den Prüfling schlupffrei hält. Das freie Zwirnende wird in die untere Umschlingungsklemme eingelegt. Der Durchschnittswert ist die angegebene Latexhaftung.

### Vergleichsbeispiel:

| | | |
|---|---|---|
| (1) | 4,5 % | BK 2104, ein Esteröl der Henkel KGaA |
| (2) | 4.5 % | STANDOPOL 1100A, ein Emulgator gemisch mit Antistatikum, ebenfalls Henkel KGaA |
| (3) | 3,0 % | HOE T 1812, ein weiterer Emulgator, Clariant Gmbtt |
| (4) | 2,8 % | LUBRIL 17040, Rhone-Poulenc |
| (5) | 0,2 % | Kaliumhydrogencarbonat |
| (6) | 85,0 % | Wasser |

Die Komponenten (1) bis (4) werden nacheinander bei einer Temperatur von 50 °C unter Rühren homogenisiert und anschließend noch weitere 30 min gerührt. Danach wird dieser Starkansatz mit vollentsalztem Wasser auf 15 % eingestellt und emulgiert. In die fertige Emulsion gibt man unter Rühren das KHCO₃ hinzu.

Auf der gleichen Spinnstreckmaschine wie oben genannt wurde mit dieser Präparation ein Garn hergestellt:

| Maschineneinstellung | | | |
|---|---|---|---|
| Nominaltiter | | dtex | 1100 |
| Filamentzahl | | | 200 |
| Spinnabzug | | m/min | 2100 |
| Geschwindigkeit | Einlaufduo | m/min | 370 |
| | Duo 1 | m/min | 375 |
| | Duo 2 | m/min | 1293 |
| | Duo 3 | m/min | 2135 |
| | Duo 4 | m/min | 2102 |
| | | | |
| Reckverhältnis | | | 1:5,76 |
| Temperaturen | Duo 1 | °C | 115 |
| | Duo 2 | °C | 125 |
| | Duo 3 | °C | 233 |
| | Duo 4 | °C | 120 |
| Präparationsauflage | | % | 0,55 |

### Erzielt wurden folgende Garnparameter:

| | | |
|---|---|---|
| Höchstzugkraft (nach DIN EN ISO 2062) | N | 84,0 |
| Feinheitsfestigkeit (nach DIN EN ISO 2062) | cN/tex | 75,0 |
| Höchstzugkraftdehnung | % | 14,2 |
| Bezugsdehnung (bei 54 cN/tex) | % | 7,2 |
| Heißluftschrumpf (bei 200°C) (nach DIN 53886-T3) | % | 12,5 |
| Latexhaftung | N/cm | 223 |

Aufgrund der schlechteren Laufeigenschaften mit dieser wäßrigen Präparation konnten die technischen Einstellungen (Abzug, Verstreckverhältnis) beim Vergleichsversuch nicht so hoch eingestellt werden.

Als Game, die vor dem Streckprozeß mit einer wasserarmen Präparation gemäß der Erfindung versehen werden, können übliche Polyestergarne, insbesondere Garne auf Basis von Polyethylenterephthalat eingesetzt werden. Es ist auch möglich, Game auf Basis von Copolyestern zu verwenden. Auch durch Zusätze modifizierte Polyester können eingesetzt werden. Besonders geeignet sind teilorientierte Game wie POY.

Es war besonders überraschend, daß die verstreckten Polyestergame gemäß der Erfindung nicht nur eine erhöhte Festigkeit, sondern auch verbesserte Haftungseigenschaften aufweisen, wenn auf die Game vor dem Streckprozeß eine wasserarme Präparation der haftvermittelnden Substanz aufgebracht wurde. Verglichen mit verstreckten Polyestergamen, bei denen eine wäßrige Präparation verwendet wurde, ist die Festigkeit um 12% und die Haftung um 10% verbessert.

Die verstreckten Polyestergame gemäß der Erfindung lassen sich sehr wirtschaftlich auch auf schnellaufenden Maschinen herstellen. Probleme in toxikologischer Hinsicht bestehen nicht. Die Herstellung ist sehr wirtschaftlich, da es nicht erforderlich ist, Emulsionen herzustellen.

## Patentansprüche

1. Verstreckte Polyestergame mit erhöhter Festigkeit und verbesserten Haftungseigenschaften zur Verstärkung von elastischen Gebilden wie Förderbändern und Reifen, **dadurch gekennzeichnet, daß** die Game eine Feinheitsfestigkeit von >80 cN/tex haben und vor dem Streckprozeß mit einer wasserarmen Präparation ausgerüstet sind, die einen Wassergehalt von unter 10 Gew.-%, bezogen auf das Gesamtgewicht der Präparation, aufweist und daß die Präparation als haftvermittelnde Substanz einen halogenierten Polyether, der mindestens eine 2-Halogenmethyloxyethyleneinheit und mindestens eine 2,3-Dihydroxypropylendgruppe aufweist und der im wesentlichen frei von Epoxidgruppen und Halohydringruppen ist, sowie gegebenenfalls übliche Zusätze wie Gleitmittel, grenzflächenaktive Substanzen und/oder Antistatika enthält.

2. Verstreckte Polyestergarne nach Anspruch 1, **dadurch gekennzeichnet, daß** der Wassergehalt der Präparation ≤ 5 Gew.-%, bezogen auf das Gesamtgewicht der Präparation, ist.

3. Verstreckte Polyestergame Anspruch 1 oder 2, **dadurch gekennzeichnet, daß** die haftvermittelnde Substanz in einem Polyglycolether gelöst ist.

4. Verstreckte Polyestergame nach einem oder mehreren der Ansprüche 2 und 3, **dadurch gekennzeichnet, daß** die aufgebrachte Präparation 5 bis 25 Gew. % halogenierten Polyether, bezogen auf das Gesamtgewicht der Präparation, enthält.

5. Verstreckte Polyestergame nach einem oder mehreren der Ansprüche 1 bis 4, **dadurch gekennzeichnet, daß** die Garne in einem Spinnstreckprozeß hergestellt sind.

6. Verfahren zur Herstellung eines Polyestergams nach mindestens einem der Patentansprüche 1 bis 5, **dadurch gekennzeichnet, daß** die Game eine Feinheitsfestigkeit von >80 cN/tex haben und vor dem Streckprozeß eine wasserarme Präparation aufgebracht wird, die einen Wassergehalt von unter 10 Gew.-%, bezogen auf das Gesamtgewicht der Präparation, aufweist und daß die Präparation als haftvermittelnde Substanz einen halogenierten Polyether, der mindestens eine 2-Halogenmethyloxyethyleneinheit und mindestens eine 2,3-Dihydroxypropylendgruppe aufweist und der im wesentlichen frei von Epoxidgruppen und Halohydringruppen ist, sowie gegebenenfalls übliche Zusätze wie Gleitmittel, grenzflächenaktive Substanzen und/oder Antistatika enthält.

7. Verwendung der Polyestergarne nach mindestens einem der Patentansprüche 1 bis 5 zur Verstärkung von elastischen Gebilden wie Förderbändern oder Reifen.

8. Präparationsmittel zum Auftragen auf Polyestergame vor dem Strecken, **dadurch gekennzeichnet, daß** die Präparation einen Wassergehalt von unter 10 Gew.-%,bezogen auf das Gesamtgewicht der Präparation, hat und als haftvermittelnde Substanz einen halogenierten Polyether, der mindestens eine 2-Halogenmethyloxyethyleneinheit und mindestens eine 2,3-Dihydroxypropylendgruppe aufweist und der im wesentlichen frei von Epoxidgruppen und Halohydringruppen ist, sowie gegebenenfalls übliche Zusätze wie Gleitmittel, grenzflächenaktive Substanzen und/oder Antistatika enthält.

## Claims

1. Drawn polyester yarns of enhanced strength and improved adhesion properties for reinforcement of elastic structures such as conveyor belts and tires, **characterized in that** the yarns having a tenactiy of > 80 cN/tex and prior to the drawing process being furnished with a fiber finish of a low water content, having a water content of below 10 % by weight, based on the total weight of the fiber finish, and **in that** the fiber finish comprises an adhesion-promoting substance comprising a halogenated polyether which contains at least one 2-halomethyloxyethylene unit and at least a 2,3-dihydroxypropyl end group and which is essentially free of epoxy groups and halohydrin groups and optionally further comprising customary additives such as lubricants, surfactants and/or antistats and the like.

2. The drawn polyester yarns of claim 1, wherein the water content of the fiber finish is ≤ 5 % by weight, based on the total weight of the fiber finish.

3. The drawn polyester yarns of claim 1 or 2, wherein the adhesion-promoting substance is dissolved in a polyglycol ether.

4. The drawn polyester yams of one or more of claims 2 and 3, wherein the fiber finish which is applied comprises from 5 to 25 % by weight, based on the total weight of the fiber finish, of the halogenated polyether.

5. The drawn polyester yarns of one or more of claims 1 to 4, wherein the yarns are produced by a spin-draw process.

6. A process for producing a polyester yarn as claimed in at least one of claims 1 to 5, **characterized in that** the yarns have a tenacity of > 80 N/tex and prior to the drawing process are furnished with a fiber finish which has a water content of below 10 % by weight, based on the total weight of the fiber finish and **in that** the fiber finish comprises an adhesion-promoting substance comprising a halogenated polyether which contains at least one 2-halomethyloxyethylene unit and at least a 2,3-dihydroxypropyl end group and which is essentially free of epoxy groups and halohydrin groups and optionally further comprising customary additives such as lubricants, surfactants and/or antistats and the like.

7. The use of the polyester yarns of at least one of claims 1 to 5 for reinforcement of elastic structures like conveyor belts or tires.

8. A fiber finish composition for application to polyester yarns prior to drawing, **characterized in that** the fiber finish having a water content of below 10 % by weight, based on the total weight of the fiber finish, and comprising an adhesion-promoting substance comprising a halogenated polyether which contains at least one 2-halomethyloxyethylene unit and at least a 2,3-dihydroxypropylene end group and which is essentially free of epoxy groups and halohyrdrin groups and optionally further comprising customary additives such as lubricants, surfactants and/or anstistats and the like.

## Revendications

1. Fils de polyester étirés à résistance accrue et propriétés d'adhérence améliorées pour le renforcement de structures élastiques telles des bandes transporteuses et des pneumatiques, **caractérisés en ce que** les fils ont une résistance spécifique >80 cN/tex et sont apprêtés avant le processus d'étirement avec une préparation à faible teneur en eau, qui présente une humidité de moins de 10 % en poids, rapportés au poids total de la préparation, et **en ce que** la préparation contient comme substance d'adhérence un polyéther halogéné qui comporte au moins une unité 2-halogénométhyloxyéthylène et au moins un groupe terminal 2,3-dihydroxypropyle, et qui est essentiellement exempt de groupes époxydes et de groupes halohydrines, ainsi que, le cas échéant, des additifs courants tels des lubrifiants, des substances tensioactives et / ou des antistatiques.

2. Fils de polyester étirés selon la revendication 1, **caractérisés en ce que** la teneur en eau de la préparation est ≤5 % en poids, rapportés au poids total de la préparation.

3. Fils de polyester étirés selon la revendication 1 ou 2, **caractérisés en ce que** l'agent d'adhésion est dissout dans un polyéther de glycol.

4. Fils de polyester étirés selon l'une quelconque ou plusieurs des revendications 2 et 3, **caractérisés en ce que** la préparation appliquée contient 5 à 25 % en poids de polyéther halogéné, rapportés au poids total de la préparation.

5. Fils de polyester étirés selon l'une quelconque ou plusieurs des revendications 1 à 4, **caractérisés en ce que** les fils sont fabriqués dans un processus de filature et d'étirage.

6. Procédé de fabrication d'un fil de polyester selon l'une au moins des revendications 1 à 5, **caractérisé en ce que** les fils ont une résistance spécifique de >80 cN/tex et **en ce qu'**une préparation à faible teneur en eau, qui présente une humidité de moins de 10 % en poids, rapportés au poids total de la préparation, est appliquée avant le processus d'étirement, et **en ce que** la préparation contient comme substance d'adhésion un polyéther halogéné qui comporte au moins une unité 2-halogénométhyloxyéthylène et au moins un groupe terminal 2,3-dihydroxypropyle, et qui est essentiellement exempt de groupes époxydes et de groupes halohydrines, ainsi que, le cas échéant, des additifs courants tels des lubrifiants, des substances tensioactives et / ou des antistatiques.

7. Utilisation de fils de polyester selon l'une au moins des revendications 1 à 5 pour le renforcement de structures élastiques telles des bandes transporteuses ou des pneumatiques.

8. Agent de préparation pour l'application sur des fils de polyester avant l'étirement, **caractérisé en ce que** la préparation présente une humidité de moins de 10 % en poids, rapportés au poids total de la préparation, et **en ce qu'**elle contient comme substance d'adhésion un polyéther halogéné qui comporte au moins une unité 2-halogénométhyloxyéthylène et au moins un groupe terminal 2,3-dihydroxypropyle, et qui est essentiellement exempt de groupes époxydes et de groupes halohydrines, ainsi que, le cas échéant, des additifs courants tels des lubrifiants, des substances tensioactives et / ou des antistatiques.
